# EUROPEAN PATENT SPECIFICATION

(11) **EP 4 377 147 B1**
(45) Date of publication and mention of the grant of the patent: **27.08.2025**
(21) Application number: 22755172.8
(22) Date of filing: 26.07.2022
(51) Int. Cl.: B60N 2/28

(54) **BASE ASSEMBLY AND CHILD SAFETY SEAT FOR VEHICLE**
BASISANORDNUNG UND KINDERSICHERHEITSSITZ FÜR EIN FAHRZEUG
ENSEMBLE DE BASE ET SIÈGE DE SÉCURITÉ POUR ENFANT POUR VÉHICULE

(30) Priority: 26.07.2021 CN 202110844522; 22.07.2022 CN 202210873961
(43) Date of publication of application: 05.06.2024
(60) Divisional application: 25187157.0
(73) Proprietor: Wonderland Switzerland AG, 6312 Steinhausen (CH)
(72) Inventor: MO, Xiaolong, Dongguan Guangdon, Guangdong 523648 (CN); ZHANG, Kun, Dongguan Guangdong, Guangdong 523648 (CN); CHENG, Manqun, Dongguan Guangdong, Guangdong 523648 (CN)
(74) Representative: Pfenning, Meinig & Partner mbB
(86) International application number: PCT/EP2022/070862
(87) International publication number: WO 2023/006701

(56) References cited:
- WO-A1-2021/122901
- CN-A- 111 251 954
- DE-U1- 202012 101 091

## Description

### TECHNICAL FIELD

The present invention relates to the technical field of child safety seat for vehicle, in particular to a base assembly and a child safety seat for a vehicle, which are convenient to operate.

### BACKGROUND

Child safety seats are indispensable for children to travel. In an existing child safety seat, a supporting leg structure is disposed on the base so as to improve stability and use safety of the child safety seat. When in use, the supporting leg structure is unfolded and touches the ground, and thus can well support the child safety seat to prevent the child safety seat from overturning; and when not in use, the supporting leg structure may be folded on the bottom of the base.

However, a front end of the base of the child safety seat equipped with a supporting leg structure is usually provided with a projection for installing and pivotally connecting the supporting leg structure. When the use of the supporting leg is not needed, the projection may, for example, not only negatively affect the seating experience of a child, but also increase a volume of the child safety seat, thus increasing its transportation cost.

An existing child safety seat with a retractable supporting leg structure may solve the above problem; however, it needs two steps to be folded and retract, i.e., folding the supporting leg structure, and then pushing the supporting leg structure to retract the supporting leg structure, so as to achieve the purpose of complete folding. This operation for folding the supporting leg structure is complicated and has a poor user experience.

There is for instance a known base assembly according to CN 111251954 A, comprising a base, a supporting leg and a sliding element telescopically disposed on the base, the supporting leg is pivotally connected to the sliding element and extending and retracting together with the sliding element.

### SUMMARY

The objective of the present invention is to provide a base assembly and a child safety seat for a vehicle which are convenient to operate.

To achieve the above objective, the present invention provides a base assembly including: a base; a supporting leg; a sliding element telescopically disposed on the base, the supporting leg being pivotally connected to the sliding element and extends and retracts together with the sliding element; and a traction element is configured to pull the supporting leg and the sliding element to move towards the bas as the supporting leg rotates from an unfolded position to a folded position.

Optionally, the traction element is a flexible element.

Optionally, the flexible element is a steel wire, a cord or a webbing.

Optionally, the base assembly further includes a driving element pivoted with the supporting leg, and the driving element is configured to roll up the traction element so that the supporting leg is pulled to move towards the base.

Optionally, the driving element is disposed on the supporting leg, and the driving element is integrally formed with the supporting leg and formed as a part of the supporting leg; alternatively, the driving element and the supporting leg are independently formed and fixedly connected by a fixing structure.

Optionally, the driving element is located at an upper end of the supporting leg.

Optionally, the driving element is shaped as a boss, and the driving element is provided with an arc-shaped part matched with the traction element; alternatively, the driving element is shaped as a pulley; alternatively, the driving element is shaped as a column.

Optionally, a first end of the traction element is connected with the base, and a second end of the traction element is connected with one of the driving element and the upper end of the supporting leg.

Optionally, an inner top wall of the base is provided with a fixing column, and the first end of the traction element is fixed on the fixing column by a first fastener.

Optionally, the base assembly further includes a stroke enlarging mechanism having a first end connected with the base and a second end connected with the supporting leg through the traction element.

Optionally, the stroke enlarging mechanism is a rhombic telescopic frame.

Optionally, a fixing frame is disposed in the base, and the first end of the stroke enlarging mechanism is connected with the fixing frame through a second fastener.

Optionally, the stroke enlarging mechanism is a pulley mechanism.

Optionally, the pulley mechanism includes a movable pulley disposed on the sliding element; a fixed pulley disposed on the base; and a linkage connecting the movable pulley and the fixed pulley; wherein the first end of the traction element is connected with the movable pulley.

Optionally, a first end of the linkage is fixed on the sliding element, and a second end of the linkage bypasses the movable pulley and the fixed pulley to be fixed on the sliding element.

Optionally, the fixed pulley includes a first fixed pulley and a second fixed pulley which are symmetrically disposed, and the linkage includes a first linkage and a second linkage which are symmetrically disposed. A first end of the first linkage is fixed on the sliding element, and a second end of the first linkage bypasses the movable pulley and the first fixed pulley to be fixed on the sliding element; and a first end of the second linkage is fixed on the sliding element, and a second end of the second linkage bypasses the movable pulley and the second fixed pulley to be fixed on the sliding element.

Optionally, the pulley mechanism includes a movable pulley disposed on the sliding element; a first fixed pulley disposed on the sliding element; a second fixed pulley disposed on the base; and a linkage connecting the first fixed pulley, the movable pulley and the second fixed pulley; wherein the first end of the traction element is connected with the movable pulley.

Optionally, the base is provided with a positioning column, the sliding element is provided with an avoidance groove to avoid the positioning column, the first end of the linkage is fixed on the positioning column, and the second end of the linkage bypasses the first fixed pulley, the movable pulley and the second fixed pulley and is fixed on the sliding element.

Optionally, the sliding element is provided with a sliding groove for the movable pulley to slide.

Optionally, the base assembly further includes a supporting leg indicator linked with the second end of the stroke enlarging mechanism, and the sliding element is provided with an indication window for at least partially exposing the supporting leg indicator.

Optionally, a buffer elastic element is disposed at a connection of the second end of the traction element and the supporting leg.

Optionally, the base assembly further includes a base bracket disposed in the base, and the sliding element comprises a sliding bracket slidably connected to the base bracket, a sliding groove is provided on one of the base bracket and the sliding bracket, and a sliding rod matched with the sliding groove is provided on the other of the base bracket and the sliding bracket.

Optionally, the present disclosure provides a child safety seat for a vehicle. The child safety seat includes a base assembly as described above and a seat disposed on the base assembly.

Optionally, the seat is rotatably disposed on the base and has at least a forward position and a backward position. The child safety seat has a first use mode and a second use mode. In the first use mode, the sliding element extends outside and the supporting leg is unfolded to form a ground-contact support, and in the second use mode, the sliding element retracts and the supporting leg is folded at the bottom of the base.

Optionally, an accommodating groove for accommodating the supporting leg is provided on the bottom of the base, and after the supporting leg is folded at the bottom of the base, a lower surface of the supporting leg does not protrude from a bottom surface of the base.

### BRIEF DESCRIPTION OF THE DRAWINGS

Various objects, features and advantages of the present invention will become more apparent by considering the following detailed description of preferred embodiments in conjunction with the accompanying drawings. The drawings are only exemplary illustrations and are not necessarily drawn to scale. In the drawings, the same reference numbers refer to the same or similar parts, wherein:
FIG. 1 is a side view of a child safety seat for a vehicle of the present invention, in which a supporting leg of a base assembly is in an unfolded position;
FIG. 2 is a side view of the child safety seat of the present invention, in which the supporting leg of the base assembly is in a folded position;
FIG. 3 is a perspective view of the base assembly of the present invention, in which the supporting leg of the base assembly is in the unfolded position;
FIG. 4 is a perspective view of the base assembly of the present invention, in which the supporting leg of the base assembly is in the folded position;
FIG. 5 is a cross-sectional view of a first embodiment of the base assembly of the present invention, in which the supporting leg of the base assembly is in the unfolded position;
FIG. 6 is a cross-sectional view of the first embodiment of the base assembly of the present invention, wherein the supporting leg of the base assembly is in the folded position;
FIG. 7 is a bottom perspective view of the first embodiment of the base assembly of the present invention, in which the supporting leg of the base assembly is in the unfolded position, and some parts are removed to show an internal structure of the base assembly;
FIG. 8 is a bottom perspective view of the first embodiment of the base assembly of the present invention, in which the supporting leg of the base assembly is in the folded position;
FIG. 9 is a side sectional view of the first embodiment of the base assembly of the present invention, in which the supporting leg of the base assembly is in the folded position;
FIG. 10 is a partial side cross-sectional view of a second embodiment of the base assembly of the present invention, in which the supporting leg of the base assembly is in the unfolded position;
FIG. 11 is a partial side sectional view of the second embodiment of the base assembly of the present invention, in which the supporting leg of the base assembly is in the folded position;
FIG. 12 is a plan view of a part of the structure of the second embodiment of the base assembly of the present invention, in which the supporting leg of the base assembly is in the unfolded position;
FIG. 13 is a partial perspective view of a part of the structure of the second embodiment of the base assembly of the present invention, in which the supporting leg of the base assembly is in the unfolded position;
FIG. 14 is a plan view of a part of the structure of the second embodiment of the base assembly of the present invention, wherein the supporting leg of the base assembly is in the folded position;
FIG. 15 is a perspective view of the second embodiment of the base assembly of the present invention, in which the supporting leg of the base assembly is in the unfolded position;
FIG. 16 is a perspective view of the second embodiment of the base assembly of the present invention, in which the supporting leg of the base assembly is in the unfolded position, and some parts are removed to show the internal structure of the base assembly;
FIG. 17 is a partial perspective view of a third embodiment of the base assembly of the present invention, in which the supporting leg of the base assembly is in the unfolded position;
FIG. 17A is a partial perspective view of a modification of the third embodiment of the base assembly of the present invention, in which the supporting leg of the base assembly is in the unfolded position;
FIG. 18 is a partial perspective view of the third embodiment of the base assembly of the present invention, in which the supporting leg of the base assembly is in the folded position;
FIG. 19 is a partial cross-sectional view of the third embodiment of the base assembly of the present invention, in which the supporting leg of the base assembly is in the unfolded position;
FIG. 20 is a partial perspective view of a fourth embodiment of the base assembly of the present invention, in which the supporting leg of the base assembly is in the unfolded position;
FIG. 21 is a partial perspective view of the fourth embodiment of the base assembly of the present invention, in which the supporting leg of the base assembly is in the folded position;
FIG. 22 is a partial perspective view of a fifth embodiment of the base assembly of the present invention, in which the supporting leg of the base assembly is in the unfolded position;
FIG. 23 is a partial perspective view of the fifth embodiment of the base assembly of the present invention, in which the supporting leg of the base assembly is in the folded position;
FIG. 24 is a partial perspective exploded view of the base assembly of the present invention.

### List of reference numbers:

Base Assembly 1
   Base 10
      Fixing Column 110
      Fixing Frame 120
      Turntable 130
      Positioning Column 150
      Base Bracket 160
         Sliding Rod 161
      Accommodating Groove 170
      Locking Element 180
      Stepped Portion 190
   Supporting Leg 20
      First Section 210
      Second Section 220
      Connecting Element 240
      Protective Cover 250
      Locking Hole 280
   Sliding Element 30
      Avoidance Groove 310
      Sliding Groove 320
      Indication Window 330
      Sliding Bracket 340
         Sliding Groove 341
         Supporting Leg Bracket 342
            Sliding Slot 3421
      Housing 350
         Upper Housing 351
         Lower Housing 352
      Bushing 360
   Traction Element 40
      Buffer Elastic Element 410
      Traction Element Limit Groove 420
   Driving Element 50
      Arc-shaped Part 510
      First Restore Element 520
      Second Restore Element 530
   Stroke Enlarging Mechanism 60
      Movable Pulley 610
      Fixed Pulley 620
         First Fixed Pulley 621
         Second Fixed Pulley 622
      Linkage 630
         First Linkage 631
         Second Linkage 632
   Supporting Leg Indicator 70
   Pivot Shaft 80
   Conversion Structure 90
      First End 910
      Second End 920
      Connecting Portion 930
Seat 2

### DETAILED DESCRIPTION

In order to explain the whole concept of the present invention more clearly, the following detailed description will be made by way of example with reference to the attached drawings of the specification.

The present invention provides a child safety seat for a vehicle, which may be installed on a vehicle seat for a baby or a child to seat, and ensures the safety of the passenger.

A first embodiment of the present invention will be described below.

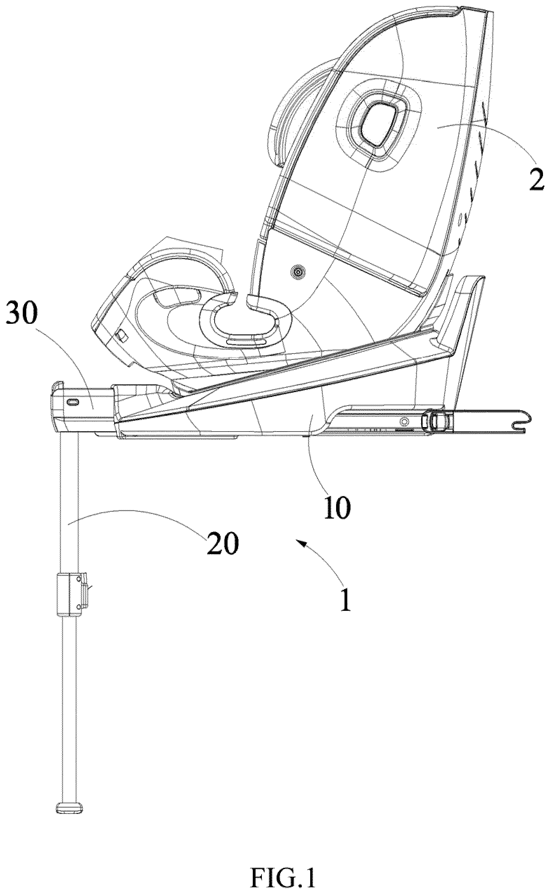

As shown in FIGS. 1-4, the child safety seat has a base assembly 1 and a seat 2.
The base assembly 1 has a base 10 and a supporting leg 20. The seat 2 is rotatably disposed on the base 10 and at least has a forward position and a backward position. The forward position may be that the seat 2 faces the front of the vehicle, and the backward position may be that the seat 2 faces the rear of the vehicle. The forward position may be applied to an older child, for example, and the backward position may be applied to a younger child, for example.

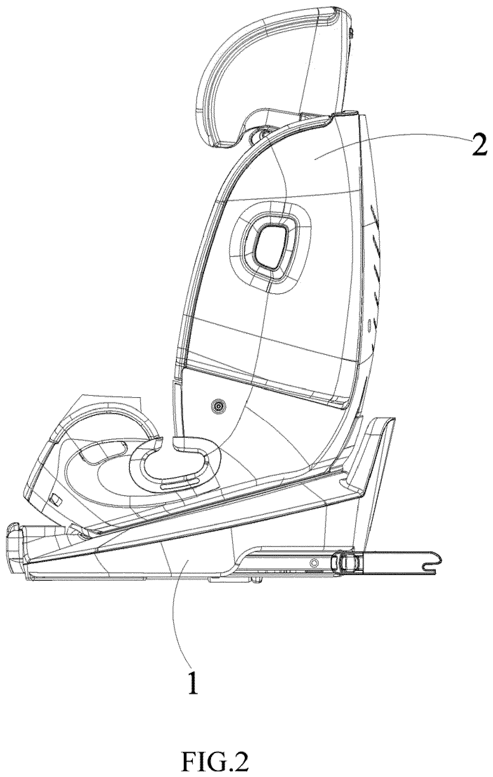

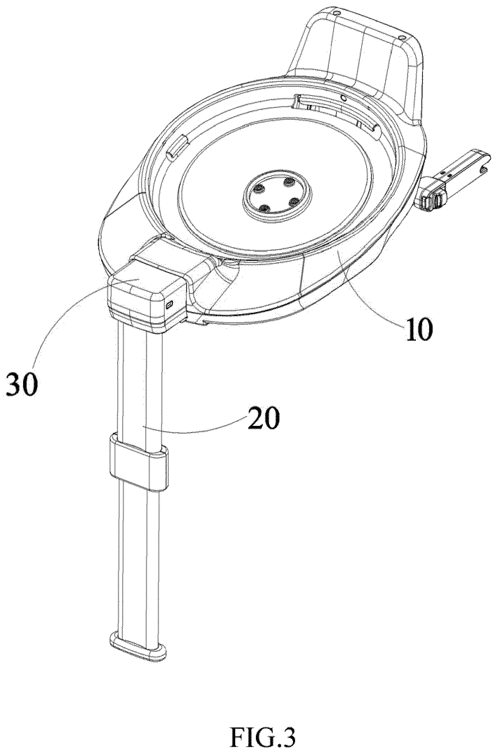

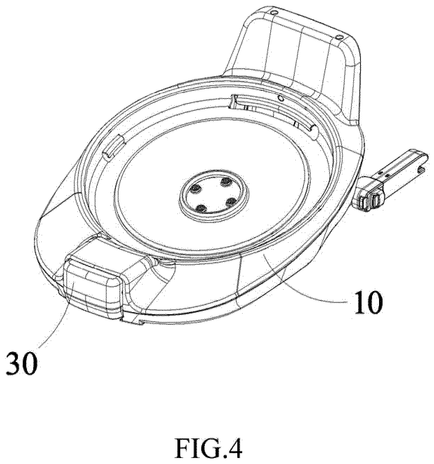

The supporting leg 20 is rotatably and telescopically connected to the base 10. When the supporting leg 20 is used, the supporting leg 20 may extend out of the base 10 and pivot to touch the ground (as shown in FIGS. 1 and 3), so that the child safety seat may be prevented from overturning during the impact. When the supporting leg 20 are not needed, the supporting leg 20 may be rotated and retracted synchronously to the bottom of the base 10 (as shown in FIGS. 2 and 4), so that the overall size of the child safety seat may be reduced, and it is convenient to store and use.

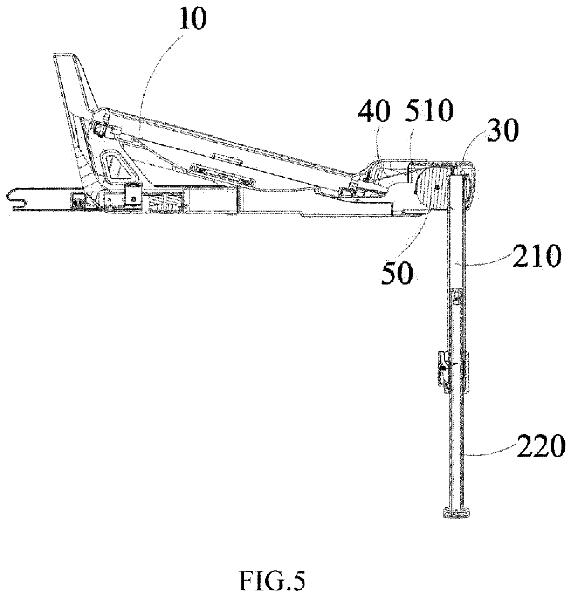

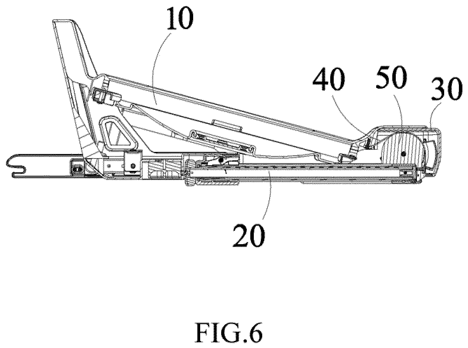

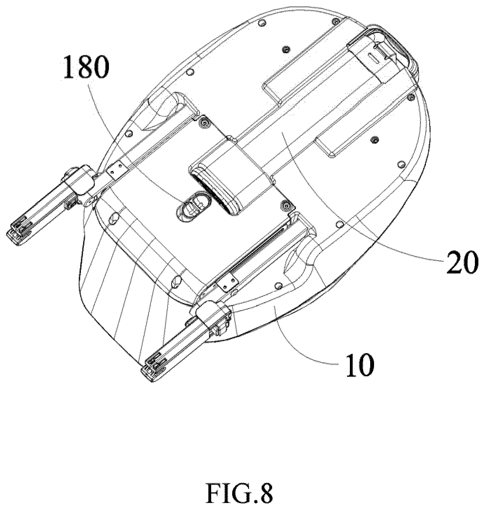

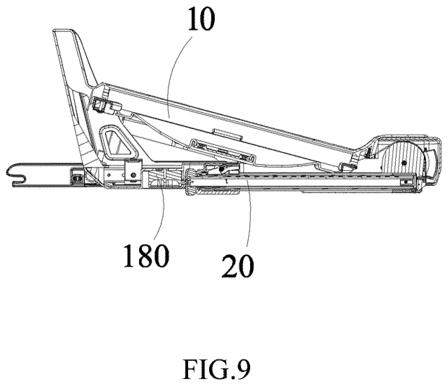

Referring to FIGS. 5-9, the base assembly further includes a sliding element 30 and a traction element 40. The sliding element 30 is telescopically disposed on the base 10, and the supporting leg 20 is pivotably connected to the sliding element 30, and is extended and retracted with the sliding element 30. The traction element 40 is configured to rotate the supporting leg 20 from an unfolded position to a folded position, so as to pull the supporting leg 20 to move towards the base 10. At this time, the sliding element 30 moves towards the base 10 together with the supporting leg 20.

The base assembly 1 may further include a driving element 50 that pivots with the supporting leg 20. When the supporting leg 20 is folded, the driving element 50 rolls up the traction element 40 to pull the supporting leg 20 and the sliding element 30 to move towards the base 10.

The traction element 40 is a flexible element, such as a steel wire, a cord or a webbing, and the present invention is not limited thereto. One end of the traction element 40 is connected with the base 10, and the other end of the traction element 40 is connected with the supporting leg 20. Optionally, the other end of the traction element 40 is fixed to an upper end of the supporting leg 20.

The driving element 50 is disposed on the supporting leg 20, for example, the driving element 50 is located at the upper end of the supporting leg 20. The driving element 50 is formed as an integral structure with the supporting leg 20 and may be formed as a part of the supporting leg 20. Optionally, the driving element 50 and the supporting leg 20 may be formed separately, and may be connected and fixed to each other by a fixing structure.

The driving element 50 may be shaped as a boss. In this embodiment, the driving element 50 is provided with an arc-shaped part 510 (referring to FIG. 5) which is matched with the traction element 40. Optionally, the driving element 50 may be shaped as a pulley. Optionally, the driving element 50 may be shaped as a column.

As the driving element 50 pivots with the supporting leg 20, the traction element 40 surrounds an outer periphery of the driving element 50, so that the other end of the traction element 40 pulls the upper end of the supporting leg 20, thereby moving the supporting leg 20 and the sliding element 30 towards the base 10 together. Optionally, the driving element 50 may have other profiles than the arc shape.

As shown in FIG. 5, the supporting leg 20 includes a first section 210 and a second section 220. The first section 210 and the second section 220 may be formed into a sleeve-like structure, and the second section 220 may be disposed inside the first section 210, and may move relative to the first section 210, so as to elongate or shorten the supporting leg 20.

Referring to FIGS. 5-6, when the supporting leg 20 is pivoted and folded, the second section 220 of the supporting leg 20 is pushed to retract into the first section 210, and then the supporting leg 20 is pushed to the left, so that the supporting leg 20 is pivoted clockwise. When the supporting leg 20 is pivoted, the traction element 40 drives the supporting leg 20 and the sliding element 30 to move towards the inside of the base 10, so that the supporting leg 20 is pivoted and retracted inward simultaneously. Finally, the sliding element 30 may be moved to a position at least partially located in the base 10, so that the sliding element 30 does not protrude or slightly protrudes from the front of the base 10. This will further shorten the overall size of the child safety seat in the front-rear direction.

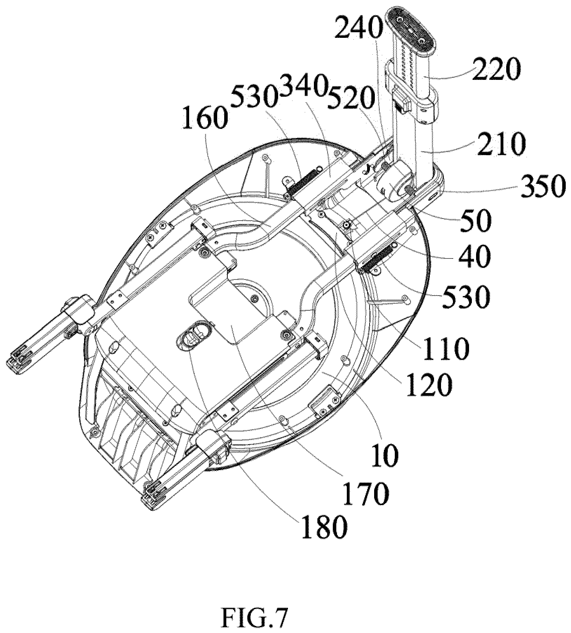

Referring to FIG. 7, the base 10 may have a fixing frame 120 and a base bracket 160. The fixing frame 120 and the base bracket 160 may be used as a carrier. The inner top wall of the base 10 is provided with a fixing column 110, and the traction element 40 is fixed on the fixing column 110 by a first fastener.

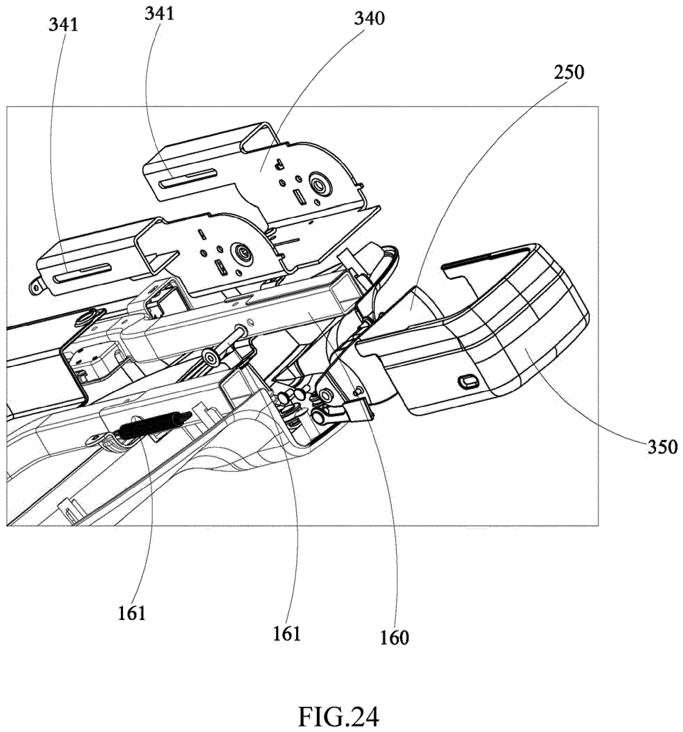

The sliding element 30 includes a sliding bracket 340 slidably connected to the base bracket 160 and a housing 350 connected to the sliding bracket 340. The housing 350 is connected and fixed with the sliding bracket 340 by rivets, for example. Referring to FIG. 24, one of the base bracket 160 and the sliding bracket 340 is provided with a sliding groove 341, and the other of the base bracket 160 and the sliding bracket 340 is provided with a sliding rod 161 matched with the sliding groove 341. In this embodiment, the sliding bracket 340 is provided with a sliding groove 341, and the base bracket 160 is provided with a sliding rod 161; however, positions of the sliding groove 341 and the sliding rod 161 may be interchangeable. Two sliding rods 161 and two sliding grooves 341 may be symmetrically disposed. In this embodiment, specifically, the sliding groove 341 is provided on the sliding bracket 340, and the sliding rod 161 is provided on the base bracket 160 and passes through the sliding groove 341. It could be understood that the above structures of the base bracket 160, the sliding bracket 340, the sliding groove 341 and the sliding rod 161 may be applied to other embodiments.

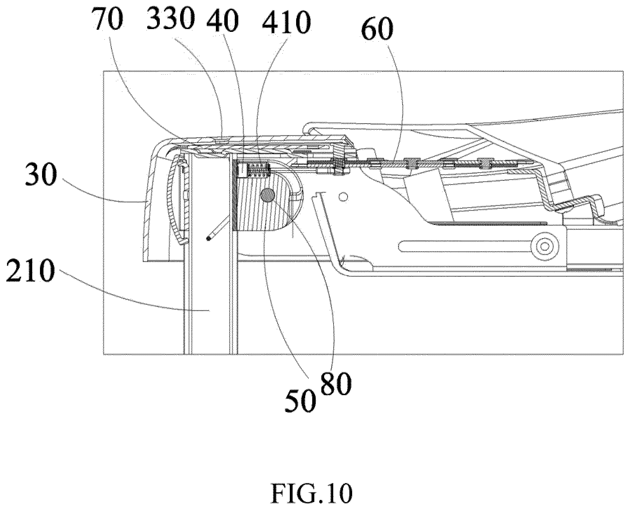

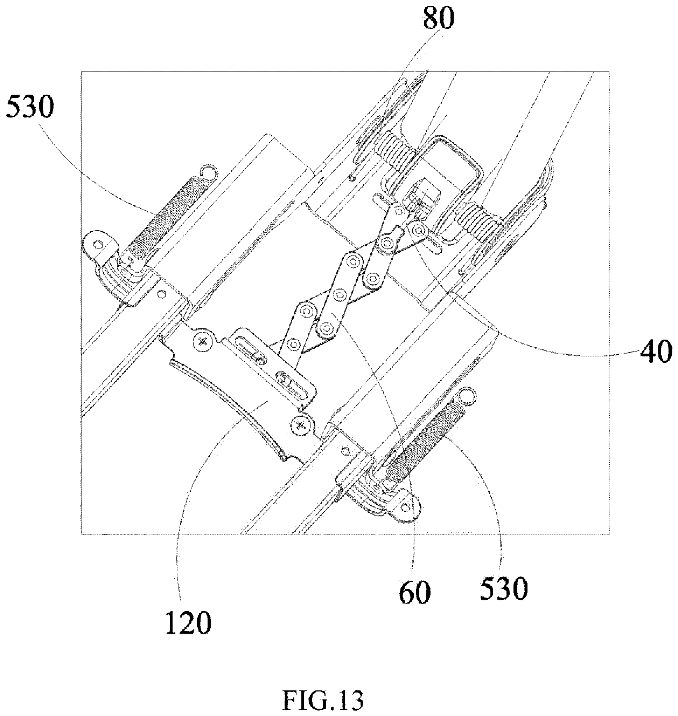

A protective cover 250 is provided in the housing 350. The pivot shaft 80 (referring to FIGS. 10 and 13) passes through the sliding bracket 340, the connecting element 240 for fixedly connecting the protective cover 250 and the supporting leg 20, and the driving element 50 so as to realize pivoting. The protective cover 250 may pivot together with the supporting leg 20 to block a gap generated after the supporting leg 20 is folded and prevent from injury.

The first restoring element 520 (for example, a torsion spring) may be disposed on or near the driving element 50, and constantly bias the supporting leg 20 to the unfolded state. In this way, the first restoring element 520 may assist the supporting leg 20 to be unfolded. A second restoring element 530 (for example, a tension spring) may be provided in the base 10. One end of the second restoring element 530 is connected with the sliding bracket 340, and the other end of the second restoring element 530 is connected with the base 10. The second restoring element 530 automatically extends the supporting leg 20 and the sliding element 30 to the front of the base assembly 1. The first restoring element 520 and the second restoring element 530 are optional, but not necessary. The number of the second restoring elements 530 may be one, two or more, which is not limited in the present invention. The first restoring element 520 may be an elastic restoring element other than a torsion spring. The second restoring element 530 may be an elastic restoring element other than a tension spring.

Referring to FIGS. 7-9, the base 10 further includes an accommodating groove 170. When the supporting leg 20 is folded, it may be accommodated in the accommodation groove 170, so that the supporting leg 20 in the folded state does not protrude from the bottom surface of the base 10, or slightly protrudes from the bottom surface of the base 10. The base 10 may further include a locking element 180. The locking element 180 may be in the form of a push button, which is movably disposed on a lower surface of the base 10, and is engaged to lock one end of the supporting leg 20 folded in the accommodating groove 170. The locking element 180 may prevent the supporting leg 20 from being accidentally rotated to the unfolded position.

The child safety seat has a first use mode, in which the sliding element 30 extends out and the supporting leg 20 is unfolded to form a ground contact support, and a second use mode, in which the sliding element 30 is retracted and the supporting leg 20 is folded to the bottom of the base 10.

A second embodiment of the present invention will be described below, in which the same parts as those of the first embodiment will be omitted.

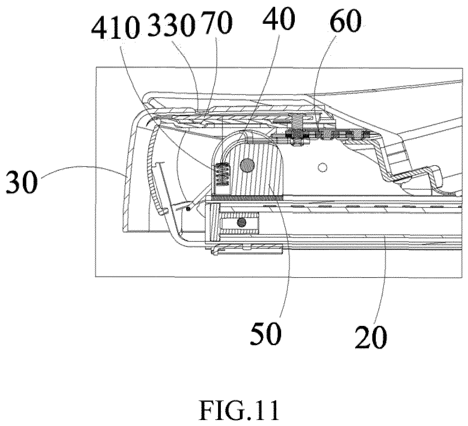

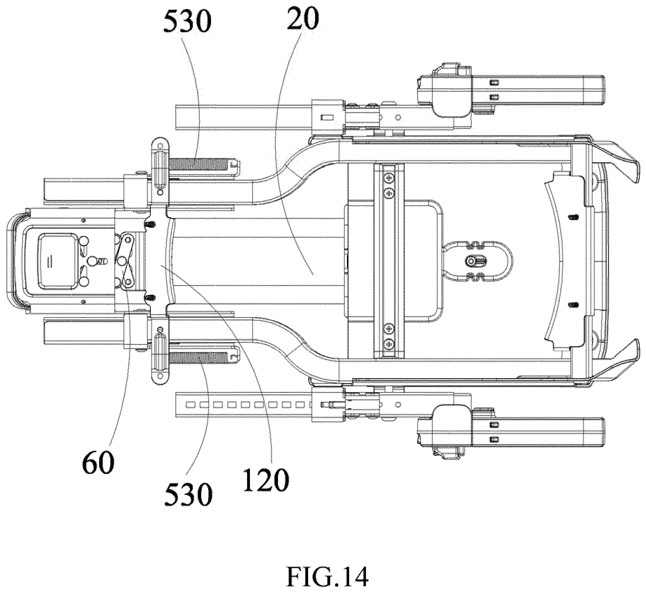

Referring to FIGS. 10-14, the base assembly 1 further includes a stroke enlarging mechanism 60. A first end of the stroke enlarging mechanism 60 is connected with the base 10, and a second end of the stroke enlarging mechanism 60 is connected with the supporting leg 20 through the traction element 40. The first end of the stroke enlarging mechanism 60 is connected and fixed with the fixing frame 120 by a second fastener. The stroke enlarging mechanism 60 may be a rhombic telescopic frame. A buffer elastic element 410 may be provided at a connection between the traction element 40 and the supporting leg 20, so as to prevent the structure of the supporting leg from being damaged by force when the supporting leg 20 is blocked during being folded.

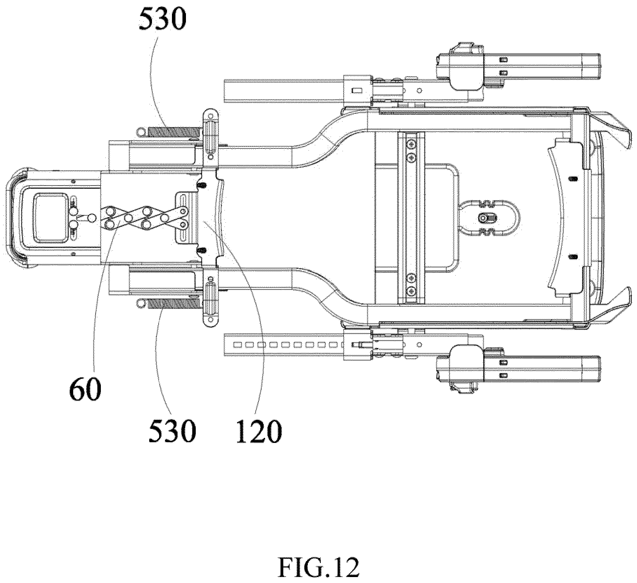

Referring to FIGS. 12-14, when the supporting leg 20 is pivoted and folded, the stroke enlarging mechanism 60 is driven and shortened with the rotation of the supporting leg 20 and the driving element 50, and the traction element 40 wraps around the driving element 50, which in turn causes the traction element 40 to pull the supporting leg 20 and the sliding element 30 to move into the base 10. This realizes that the supporting leg 20 is folded and retracted inward simultaneously, and the operation is convenient.

In this embodiment, the stroke enlarging mechanism 60 is provided to enlarge a distance with which one end of the traction element 40 is driven by the supporting leg 20, and drive the supporting leg 20 and the sliding element 30 to extend and retract together for a longer distance, so that the supporting leg 20 and the sliding element 30 retract in place without protruding to the front of the base 10 while the supporting leg 20 is pivoted to the accommodating groove 170, and vice versa.

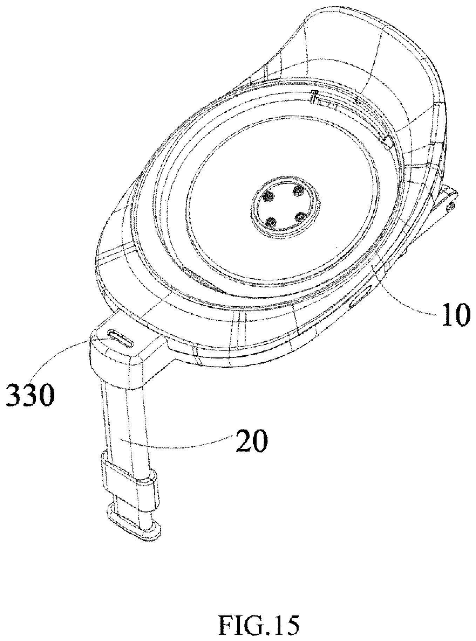

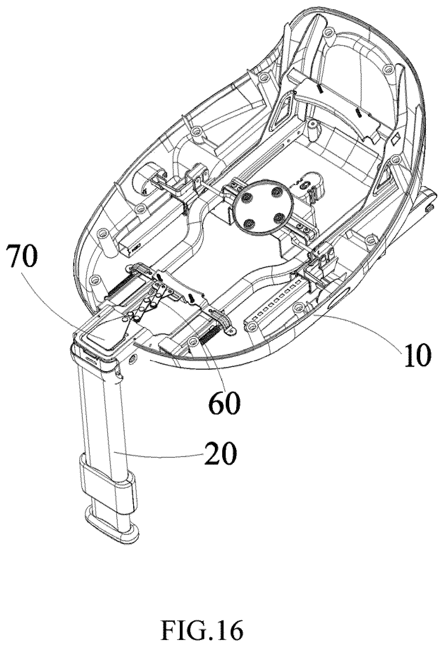

Referring to FIGS. 15 and 16, the base assembly 1 further includes a supporting leg indicator 70 linked with the second end of the stroke enlarging mechanism 60. The sliding element 30 is provided with an indication window 330 for at least partially exposing the supporting leg indicator 70. When the supporting leg 20 is unfolded and the sliding element 30 extends out from the front of the base 10, the supporting leg indicator 70 may indicate whether the supporting leg is in the unfolded state through the indication window 330, which may be achieved, for example, by displaying corresponding colors. With the supporting leg indicator 70, a state of the supporting leg 20 may be conveniently determined, thereby facilitating to be used; moreover, the supporting leg indicator 70 is driven by the stroke enlarging mechanism 60, and there is no need to additionally provide a driving element, so that the structure is simple. In addition, the stroke enlarging mechanism 60 is completely synchronized with the unfolding or folding of the supporting leg 20, so that the user may be more accurately prompted about the unfolding or folding state of the supporting leg 20.

Specifically, when the supporting leg 20 is unfolded, the stroke enlarging mechanism 60 drives the supporting leg 20 and the sliding element 30 to protrude towards the front of the base 10, and a color part (for example, a green part) of the supporting leg indicator 70 is aligned with the indication window 330, indicating that the supporting leg 20 is unfolded. When the supporting leg 20 is folded, another color part (for example, a red part) of the supporting leg indicator 70 is aligned with the indication window 330.

The second embodiment is mainly different from the first embodiment in that, one end of the traction element 40 is connected with the supporting leg 20, and the other end of the traction element 40 is connected with the base 10 through the stroke enlarging mechanism 60, so that the rotation of the supporting leg 20 may drive the supporting leg 20 to extend and retract for a longer distance, so as to meet better use requirements.

A third embodiment of the present invention will be described below, in which the same parts as those of the first embodiment will be omitted.

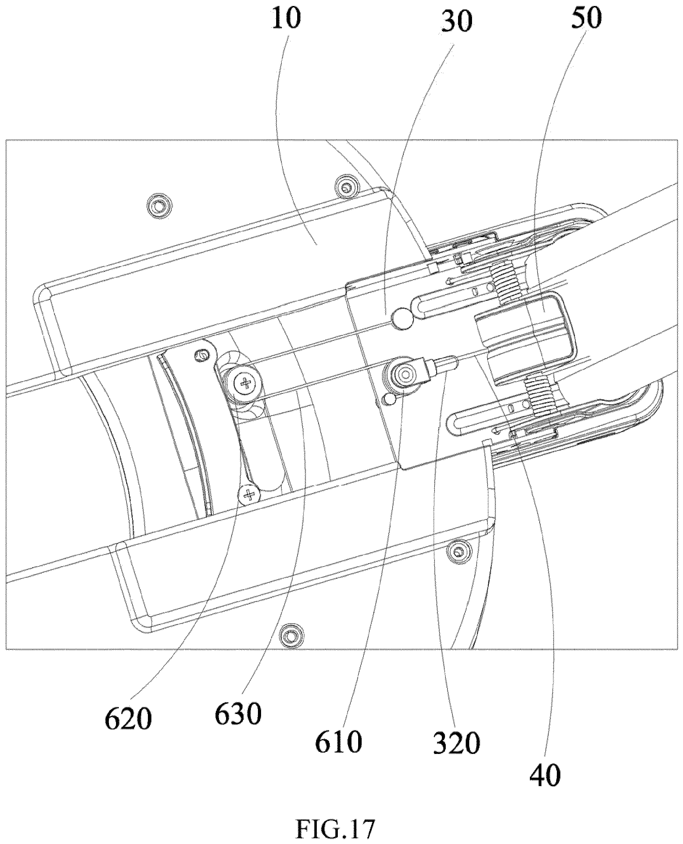

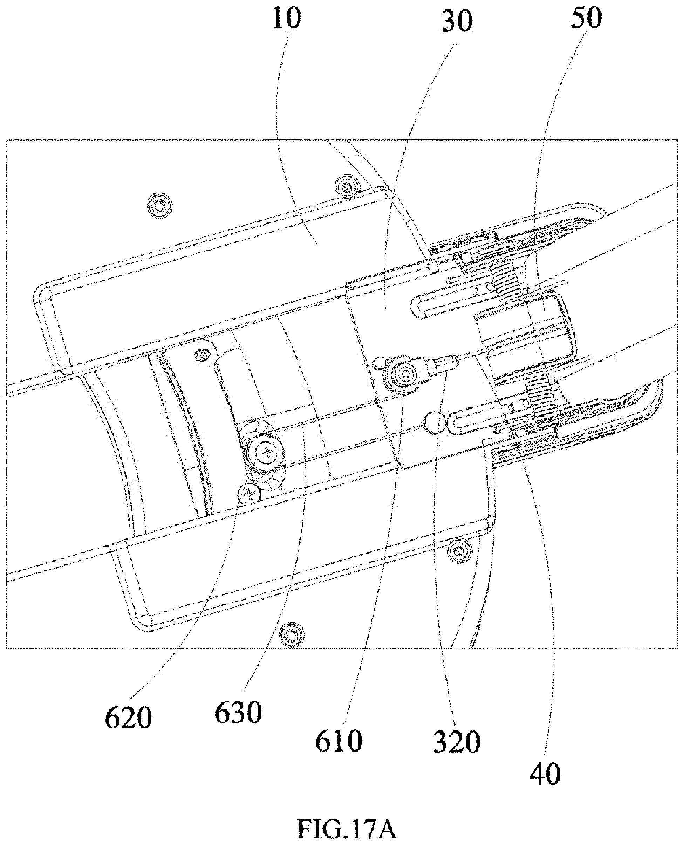

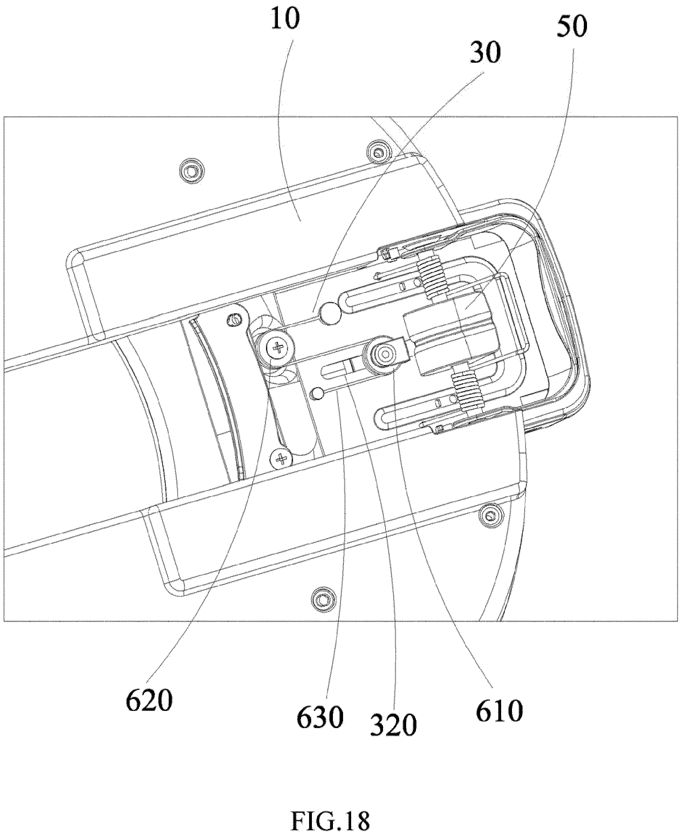

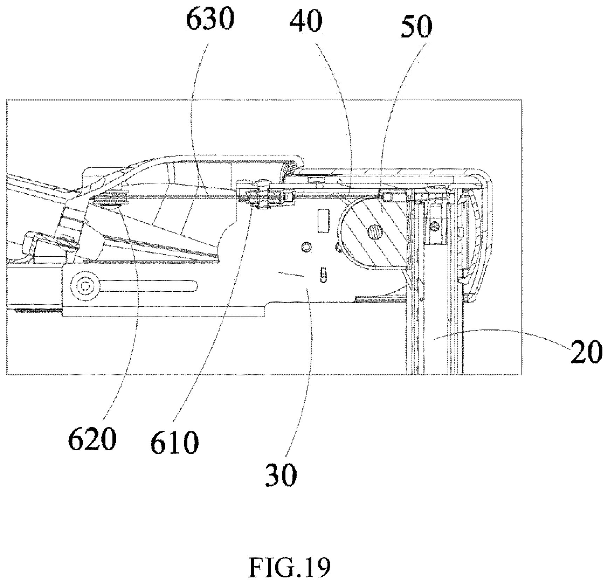

Referring to FIGS. 17-19, in this embodiment, the base assembly has a stroke enlarging mechanism 60. The stroke enlarging mechanism 60 is a pulley mechanism. The pulley mechanism includes a movable pulley 610 disposed on the sliding element 30, a fixed pulley 620 disposed on the base 10, and a linkage 630 connecting the movable pulley 610 and the fixed pulley 620. A first end of the traction element 40 is connected with the movable pulley 610, and a second end of the traction element 40 is connected with the supporting leg 20. The first end of the linkage 630 is fixed on the sliding element 30. The second end of the linkage 630 sequentially bypasses the movable pulley 610 and the fixed pulley 620, and then is fixed on the sliding element 30.

The sliding element 30 is provided with a sliding groove 320. The movable pulley 610 is movably disposed in the sliding groove 320. Referring to FIG. 17, the fixed pulley 620 is located on a left side of the movable pulley 610. Of course, referring to FIG. 17A, the fixed pulley 620 may also be located on a right side of the movable pulley 610, and a fixed position of the first end and a fixed position of the second end of the linkage 630 may be adjusted accordingly.

When the supporting leg 20 is folded, the traction element 40 wraps around the driving element 50 and pulls the supporting leg 20 and the sliding element 30 to move into the base 10 with rotation of the supporting leg 20 and the driving element 50. This realizes that the supporting leg 20 is retracted inward and folded synchronously. In this process, as the traction element 40 pulls the movable pulley 610, the linkage 630 pulls the supporting leg 20 and the sliding element 30 towards the base 10, so that the sliding element 30 is retracted into the base 10.

A fourth embodiment of the present invention will be described below, in which the same parts as those of the first embodiment will be omitted.

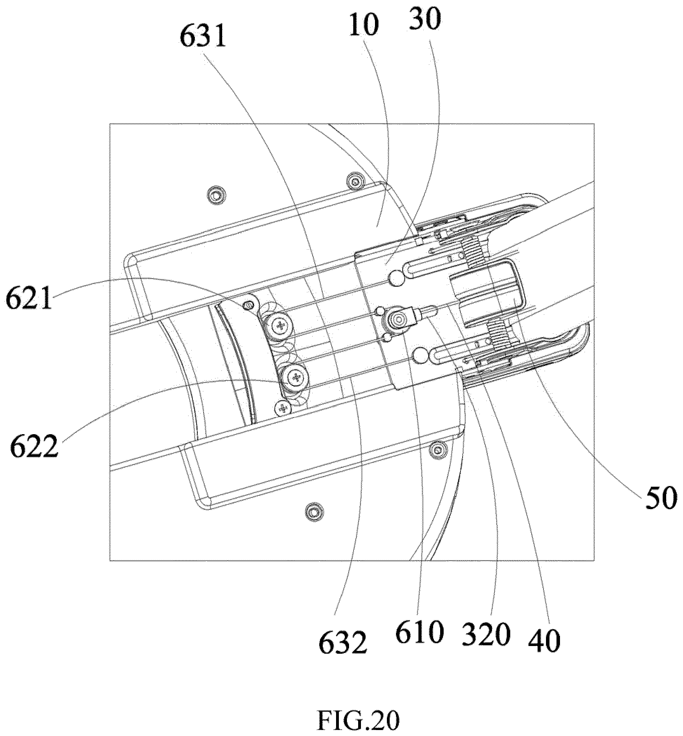

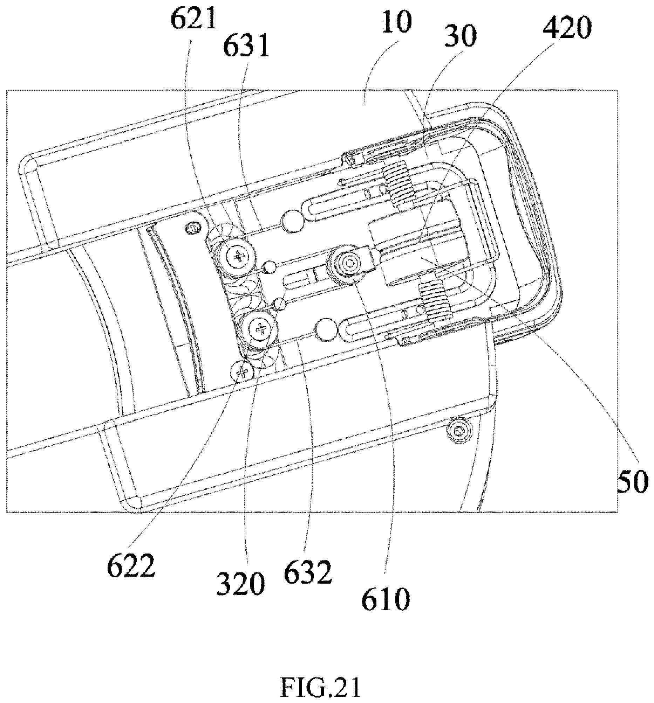

Referring to FIGS. 20 and 21, the base assembly has a stroke enlarging mechanism 60. The stroke enlarging mechanism 60 is a pulley mechanism. The pulley mechanism includes a movable pulley 610 disposed on the sliding element 30, a fixed pulley 620 disposed on the base 10, and a linkage 630 connecting the movable pulley 610 and the fixed pulley 620. The fixed pulley 620 includes a first fixed pulley 621 and a second fixed pulley 622 which are symmetrically disposed, and the linkage 630 may include a first linkage 631 and a second linkage 632 which are symmetrically disposed. A first end of the first linkage 631 is fixed on the sliding element 30, a second end of the first linkage 631 passes through the movable pulley 610 and the first fixed pulley 621 and is fixed on the sliding element 30, the first end of the second linkage 632 is fixed on the sliding element 30, and the second end of the second linkage 632 passes through the movable pulley 610 and the second fixed pulley 622 and is fixed on the sliding element 30.

The sliding element 30 may be provided with a sliding groove 320. The movable pulley 610 is movably disposed in the sliding groove 320.

When the supporting leg 20 is folded, the traction element 40 wraps around the driving element 50 and pulls the supporting leg 20 and the sliding element 30 to move into the base 10 with the rotation of the supporting leg 20 and the driving element 50. This realizes that the supporting leg 20 is retracted inward and folded synchronously. In this process, as the traction element 40 pulls the movable pulley 610, the linkage 630 pulls the supporting leg 20 and the sliding element 30 towards the base 10, so that the sliding element 30 is retracted into the base 10. A first end of the traction element 40 is connected with the movable pulley, and a second end of the traction element 40 is connected with the supporting leg 20. The driving element 50 is formed with a traction element limit groove 420 for limiting the traction element 40.

A fifth embodiment of the present invention will be described below, in which the same parts as those of the first embodiment will be omitted.

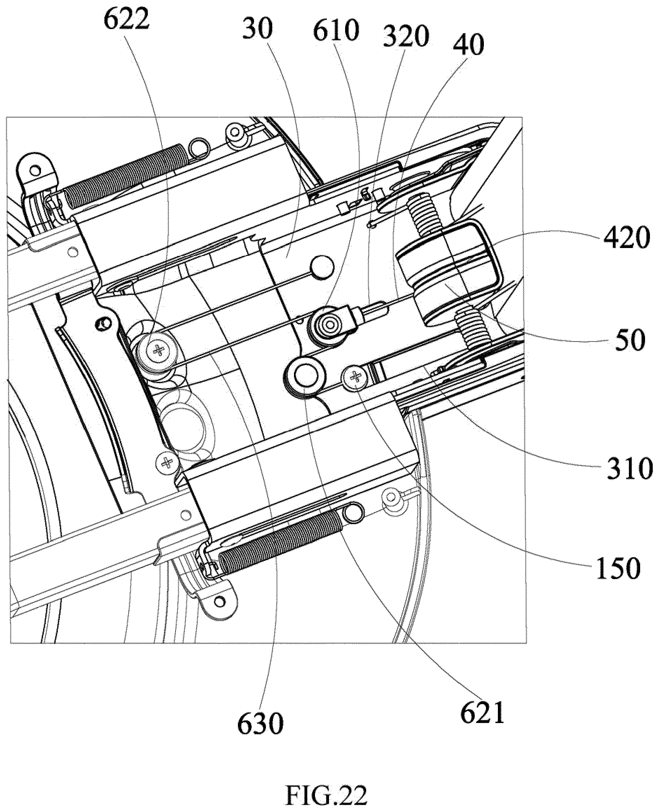

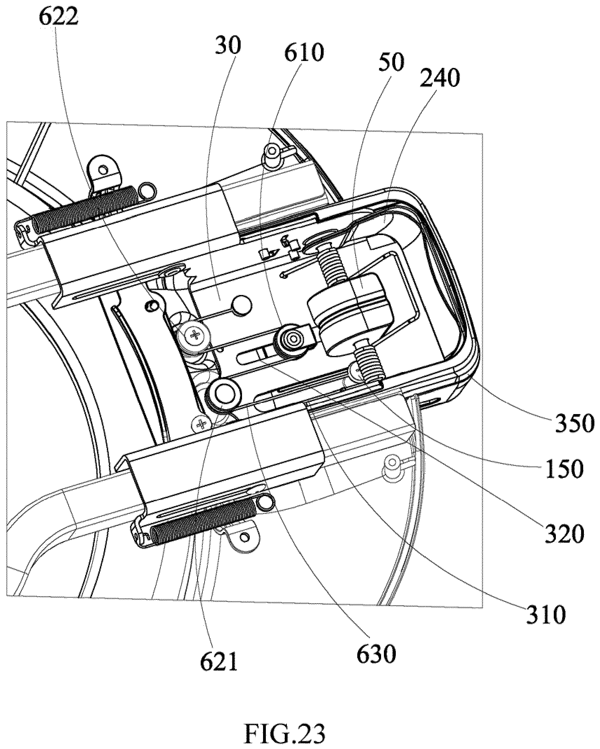

Referring to FIGS. 22-24, the base assembly has a stroke enlarging mechanism 60. The stroke enlarging mechanism 60 is a pulley mechanism. The pulley mechanism includes a movable pulley 610 and a first fixed pulley 621 disposed on the sliding element 30, a second fixed pulley 622 disposed on the base 10, and a linkage 630 connecting the first fixed pulley 621, the movable pulley 610 and the second fixed pulley 622. A first end of the traction element 40 is connected with the movable pulley 610, and a second end of the traction element 40 is connected with the supporting leg 20.

The base 10 is provided with a positioning column 150. The sliding element 30 is provided with an avoidance groove 310 to avoid the positioning column 150. A first end of the linkage 630 is fixed on the positioning column 150, and a second end of the linkage 630 sequentially passes through the first fixed pulley 621, the movable pulley 610 and the second fixed pulley 622 and is fixed on the sliding element 30.

The sliding element 30 includes a sliding bracket 340 slidably connected to the base bracket 160 and a housing 350 connected with the sliding bracket 340. For example, the housing 350 is connected and fixed with the sliding bracket 340 by rivets. One of the base bracket 160 and the sliding bracket 340 is provided with a sliding groove 341, and the other of the base bracket 160 and the sliding bracket 340 is provided with a sliding rod 161 matched with the sliding groove 341. In this embodiment, the sliding bracket 340 is provided with a sliding groove 341, and the base bracket 160 is provided with a sliding rod 161; however, positions of the sliding groove 341 and the sliding rod 161 may be interchangeable. In this embodiment, specifically, the sliding groove 341 is disposed on the sliding bracket 340, and the sliding rod 161 is disposed on the base bracket 160 and passes through the sliding groove 341. It can be understood that the above structures of the base bracket 160, the sliding bracket 340, the sliding groove 341 and the sliding rod 161 may be applied to any of the other embodiments described above.

With the above-mentioned technical solutions, the embodiments of the present disclosure have the following advantages (Note that the different embodiments can be combined with each other):
1. In the embodiments, the supporting leg is provided to at least have an unfolded position and a folded position, so that when the child safety seat is used, the child safety seat can be well supported by the supporting leg to prevent the child safety seat from overturning, and when it is not in use, the supporting leg may be folded at the bottom of the base to accommodate the supporting leg conveniently, and a volume of the child safety seat can be reduced to decrease the transportation cost. Also, in the embodiments of the present disclosure, the sliding element is telescopically disposed on the base, and the supporting leg is pivotally connected to the sliding element and extends and retracts with the sliding element, so that the supporting leg may be conveniently installed, pivoted well, and may also extend and retract with the extending and retracting of the sliding element. In this way, when the supporting leg is not in use, the sliding element may retract into the bottom of the base to minimize or even eliminate protruding of the sliding element from the front end of the base, thereby prevent interference with feet of the child and improving the riding experience of the child, further reducing the volume of the child safety seat to further decrease the transportation cost. Moreover, due to the traction element, when the supporting leg is pivoted and folded, the traction element may be tightened to form an inward reaction force, so that the supporting leg may synchronously retract inward, that is, in a direction close to the base, and then it is not necessary to push the supporting leg to retract after the supporting leg is folded, thereby simplifying the operation of the user. Thus, the embodiments of the present disclosure have advantages of simple operation, good user experience and high satisfaction degree, and provides differentiation from existing products and greatly enhances the market competitiveness of products.
2. The traction element is provided as a flexible element, and thus has a certain flexibility and deflection, which is convenient for rolling deformation of the traction element, so that the supporting leg may well retract inward during folding, so as to ensure the retraction effect of the supporting leg, and thus the retraction effect of the sliding element; moreover, when the supporting leg is folded, the operation is simple and effortless, and the user experience is greatly improved.
3. The flexible element is provided as a steel wire, in this way, the strength of the traction element can be well ensured to avoid from being broken when tensioned, the durability can be improved, and good flexibility and bending deflection can be ensured, so that when the supporting leg is pivoted and folded, a good inward reaction force may be formed, and the supporting leg may retract inward; alternatively, the flexible element may be provided as a cord or a webbing, so that the supporting leg may retract inward synchronously when the supporting leg is pivoted and folded, simplifying the operation of the user, and reducing the overall cost of the child safety seat due to the lower material cost of the cord or webbing.
4. The driving element is provided to be pivoted with the supporting leg, the traction element may form a better reaction force when the supporting leg is pivoted and folded, that is, the driving element may roll up the traction element to a certain extent, so that the supporting leg may be better pulled to retract inwards, and the supporting leg may be folded completely. In this way, the sliding element will not protrude too far from the front end of the base to affect the riding experience of the child, and the use experience of the child safety seat can be improved. In addition, the volume of the child safety seat can be reduced during transportation, so as to reduce the transportation cost.
5. The driving element is provided on the supporting leg, which is convenient for the driving element to pivot with the supporting leg, and the driving element is integrally formed with the supporting leg and formed as a part of the supporting leg, which ensures the strength and durability of the driving element and prolongs its service life; alternatively, the driving element and the supporting leg are separated structure and fixedly connected by a fixing structure, so that it is convenient to set the structure and position of the driving element, and the structural design is more flexible without being limited by the structure and position of the driving element.
6. The driving element is located at an upper end of the supporting leg, so that the supporting leg may be retracted by being pivoted with a small angle when the supporting leg is pivoted and folded, which not only saves the force when the supporting leg is pivoted and folded, but also reduces the length of the traction element to reduce the material cost, thus reducing the overall production cost.
7. The driving element is shaped as a boss, and the driving element is provided with an arc-shaped part matched with the traction element. In this way, when the supporting leg is pivoted and folded, the driving element may form a better rolling effect on the traction element, so that the traction element may form a larger inward reaction force to retract the supporting leg inward, ensuring the retraction effect of the supporting leg and thus the retraction effect of the sliding element; alternatively, the driving element may be shaped as a pulley or a column, so that the traction element may be rolled up well, i.e., applying a force to the traction element, and thus the traction element may generate enough reaction force to pull the supporting leg to retract with a good the retraction effect.
8. The first end of the traction element is fixedly connected with the base, and a second end of the linkage is fixedly connected with the driving element, so that one end of the traction element is fixedly disposed and the other end is movably disposed. In this way, the other end of the traction element is rolled up and tightened by the driving element when the supporting leg is pivoted, so that the traction element is stressed to ensure that when a force with which the driving element is pivoted outwards is applied on the traction element, a reaction force which pulls the supporting leg to retract inwards may be formed, thus ensuring that the supporting leg may retract synchronously when pivoting and folding, and the traction member is stable and reliable when the force is applied, and is not easy to be broken. In addition, the supporting leg may retract by pivoting the supporting leg with a small angle. Alternatively, a second end of the traction element may be directly fixed to the upper end of the supporting leg, so that the supporting leg directly drives the traction element when the supporting leg is pivoted and folded, and under the action of the driving element, the traction element is tightened to form a reaction force, so as to realize the synchronous inward retraction of the supporting leg when it is pivoted and folded.
9. The base is provided with a fixing column and the fixing column is matched with a fastener to fix the first end of the traction element with the base. This fixing method is simple, reliable and not easy to loosen, so as to ensure the effect of the traction element.
10. The stroke enlarging mechanism is provided and has a first end connected with the base and a second end connected with the supporting leg through a traction element, so that the traction element is driven when the supporting leg is pivoted and folded, and then the traction element drives the stroke enlarging mechanism, which in turn drives the supporting leg to retract inward, so as to synchronously retract inward when the supporting leg is folded. This is convenient to operate and also increase an inward retraction length of the supporting leg to meet better use requirements.
11. The rhombic telescopic frame is used, which not only has a good telescopic effect to ensure the retraction effect of the supporting leg, but also has a large telescopic change, that is, it may be stretched to a large length or retracted to a small length, thereby achieving a better stroke enlarging effect, and especially greatly enhancing the effect of retracting the supporting leg. In addition, its strength is sufficient, and it is not easy to deform or loosen when pulling the supporting leg; and its structure is simple, which is convenient for production and processing and whole machine assembly, and improves the production and assembly efficiency. Specifically, the rhombic telescopic frame is formed by connecting a plurality of rhombic structures, and the rhombic structures include a plurality of groups of two connecting rod assemblies hinged at the middle position, so as to ensure the effect of the rhombic telescopic frame and facilitate the production and assembly of the rhombic telescopic frame.
12. The fixing frame is provided to facilitate the fixing between the stroke enlarging mechanism and the base, and the fixing is reliable, so as to ensure the stability and reliability of the stroke enlarging mechanism when it stretches and retracts.
13. The pulley mechanism is provided so that the stroke is enlarged, the operation process is smooth, the resistance is small, the structure is reliable and the cost is low.
14. The movable pulley, the fixed pulley and the linkage are provided to enlarge the stroke and provide a simple and reliable structure.
15. The first end of the linkage is fixed on the sliding element, and the second end of the linkage bypasses the movable pulley and the fixed pulley in turn and is fixed on the sliding element, so that when the supporting leg is pivoted and folded to drive the traction element, and then the traction element drives the stroke enlarging mechanism, which in turn drives the supporting leg to retract inward, so as to synchronously retract inward when the supporting leg is folded, thereby facilitating to operate and increasing the inward retraction length of the supporting leg to meet better use requirements.
16. Two fixed pulley and two linkages are provided, so that the pulley mechanism can run more stably, and the supporting leg is evenly stressed when they are unfolded and folded, and at the same time, it has a greater stroke enlarging effect.
17. The first fixed pulley is provided on the sliding element, so that the pulley mechanism can run more stably, and at the same time, it has a greater stroke enlarging effect, and reduces the number of linkages used.
18. The positioning column and the avoidance groove are provided, so that the positioning column may move relative to the sliding element, ensuring the stability and reliability of the stroke enlarging mechanism during extending and retracting.
19. The sliding groove is provided for the movable pulley to slide, so that the movable pulley will not have unexpected displacement in the moving process, which ensures that the supporting leg retracts at a uniform speed when it is folded.
20. The supporting leg indicator and the indication window are provided, so that the state of the supporting leg can be conveniently determined, and it is more convenient for the user. Moreover, the supporting leg indicator is driven by the stroke enlarging mechanism, so that it is not necessary to additionally provide a driving element, and in this way, the structure is simple, and the stroke enlarging mechanism is completely synchronized with the unfolding or folding of the supporting leg, so that the user can be more accurately prompted about the unfolding or folding state of the supporting leg.
21. The buffer elastic element is provided to prevent the supporting leg from being damaged by force when the supporting leg is blocked during being folded.
22. The sliding groove and the sliding rod are provided, so that the sliding element may be retracted into the base when the supporting leg is folded, thereby further reducing the volume of the base assembly.
23. In the child safety seat of the embodiments of the present disclosure, the supporting leg is retracted inward synchronously by tightening the traction element to form an inward reaction force when the supporting leg is pivoted and folded, which is simple and convenient to operate and saves the volume.
24. The sliding element is provided and the supporting leg is pivotally connected to the sliding element, so that the supporting leg may be unfolded and folded with the extending and retracting of the sliding element, and the safety seat in both use modes has good safety when unfolded and small size when folded. In a first use mode, the seat faces backward and the supporting leg is unfolded, or the seat faces forward and the supporting leg is unfolded; and in a second use mode (BOOSTER mode), the seat faces forward and the supporting leg is folded. In the first use mode, the seat may be used backward with the supporting leg unfolded or forward with the supporting leg unfolded. More specifically, a mode that the seat faces backward with the supporting leg unfolded is suitable for a child who is younger than 15 months and/or whose height is between 0 and 105 cm, and a mode that the seat faces forward with the supporting leg unfolded is suitable for a child who is older than 15 months and/or whose height is between 76 cm and 105 cm, that is, this is a "small child" mode. In the second use mode (BOOSTER mode), the seat needs to face forward and the supporting leg needs to be folded before use. This mode is suitable for a child whose height is between 100 cm and 150 cm, that is, this is a "big child" mode.
   In the first use mode, the extending and retracting of the sliding element may adjust the ground contact position of the supporting leg after it is unfolded, which can ensure that the upper end of the supporting leg supports the base at a right position, and can well support the safety seat and prevent the safety seat from overturning, thereby ensuring the safety of the safety seat when it is used. Meanwhile, there is enough space in the rear row of seats of the vehicle, and when the vehicle is impacted, the sufficient space in the forward and backward direction may form a good buffering effect, so that the small child will be well protected. Also, the large space is convenient to install the safety seat, and it is also convenient to put the small child in and out. Moreover, in the second use mode, that is, when the supporting leg is not needed, the supporting leg may be folded and hidden under the base, and then the safety seat is installed on the vehicle seat for the big child to use. Since the big child is usually taller than a small child, he/she needs more space. The second use mode of the safety seat not only increases the available space in the rear row of seats of the vehicle to satisfy the riding space of the big child, but also forms a better cushion when the vehicle is impacted since the space in the forward or backward direction is large enough, thereby providing a better safety protection for the big child and more space for the big child to put his/her feet, improving the riding comfort of the safety seat, and ensuring the safety and stability of the safety seat when it is used by the big child; meanwhile, when not in use, the supporting leg may be stored and hidden, reducing the overall size of the safety seat, reducing the packaging volume of the safety seat, and reducing the transportation cost. In addition, since the supporting leg is extended and retracted and is folded along with the sliding element, the overall size of the safety seat is changeable, so that it may be suitable for different types of vehicles although the space in the rear row is different due to the different types of vehicles, thereby greatly improving the application range of the safety seat of the embodiments of the present disclosure. Moreover, the safety seat may be used in two modes, i.e., for a small child and a big child, that is to say, the safety seat of the embodiments of the present disclosure is multi-purpose, which greatly improves the application range of the embodiments of the present disclosure, and thus the user may only buy one safety seat, which greatly reduces the cost of the user. Therefore, it is more attractive for the user, forms a product differentiation, and greatly enhances the market competitiveness of products.
25. The accommodating groove is provided, after the supporting leg is folded at the bottom of the base, the lower surface of the child safety seat is flat, making full use of the space of the base and further saving the space.

Those skilled in the art will easily think of other embodiments after considering the specification as mentioned above. The specification and its embodiments are to be regarded as examples only, and the scop of the present invention is by the claims.

## Claims

1. A base assembly (1) comprising:
a base (10);
a supporting leg (20);
a sliding element (30) telescopically disposed on the base (10), the supporting leg (20); being pivotally connected to the sliding element (30) and extending and retracting together with the sliding element (30); **characterized in that**
a traction element (40) is configured to pull the supporting leg (20) and the sliding element (30) to move towards the base (10) as the supporting leg (20) rotates from an unfolded position to a folded position.

2. The base assembly (1) according to claim 1, **characterized in that**, the traction element (40) is a flexible element,
preferably, the flexible element is a steel wire, a cord, or a webbing.

3. The base assembly (1) according to any of the previous claims, **characterized in that**, the base assembly (1) further comprises a driving element (50) pivoted with the supporting leg (20), and the driving element (50) is configured to roll up the traction element (40) so that the supporting leg (20) is pulled to move towards the base (10),
preferably, the driving element (50) is disposed on the supporting leg (20), and the driving element (50) is integrally formed with the supporting leg (20) and formed as a part of the supporting leg (20); alternatively, the driving element (50) and the supporting leg (20) are separately formed and fixedly connected to each other by a fixing structure.

4. The base assembly (1) according to claim 3, **characterized in that**, the driving element (50) is located at an upper end of the supporting leg (20),
and/or the driving element (50) is shaped as a boss, and the driving element (50) is provided with an arc-shaped part matched with the traction element (40); alternatively, the driving element (50) is shaped as a pulley; alternatively, the driving element (50) is shaped as a column,
and/or a first end of the traction element (40) is connected with the base (10), and a second end of the traction element (40) is connected with one of the driving element (50) and an upper end of the supporting leg (20),
and/or an inner top wall of the base (10) is provided with a fixing column, and the first end of the traction element (40) is fixed on the fixing column by a first fastener.

5. The base assembly (1) according to any of the previous claims, **characterized in that**, the base assembly (1) further comprises a stroke enlarging mechanism (60) having a first end connected with the base (10) and a second end connected with the supporting leg (20) through the traction element (40),
preferably, the stroke enlarging mechanism (60) is a rhombic telescopic frame,
preferably, a fixing frame (120) is disposed in the base (10), and the first end of the stroke enlarging mechanism (60) is connected with the fixing frame (120) through a second fastener.

6. The base assembly (1) according to claim 5, **characterized in that**, the stroke enlarging mechanism (60) is a pulley mechanism.

7. The base assembly (1) according to claim 6, **characterized in that**, the pulley mechanism comprises:
a movable pulley (610) disposed on the sliding element (30);
a fixed pulley (620) disposed on the base (10); and
a linkage (630) connecting the movable pulley (610) and the fixed pulley (620);
wherein the first end of the traction element (40) is connected with the movable pulley (610),
preferably, a first end of the linkage (630) is fixed on the sliding element (30), and a second end of the linkage (630) bypasses the movable pulley (610) and the fixed pulley (620) to be fixed on the sliding element (30).

8. The base assembly (1) according to claim 7, **characterized in that**, the fixed pulley (620) comprises a first fixed pulley (621) and a second fixed pulley (622) which are symmetrically disposed, the linkage (630) comprises a first linkage (631) and a second linkage (632) which are symmetrically disposed, a first end of the first linkage (631) is fixed on the sliding element (30), and a second end of the first linkage (631) bypasses the movable pulley (610) and the first fixed pulley (621) to be fixed on the sliding element (30); and a first end of the second linkage (632) is fixed on the sliding element (30), and a second end of the second linkage (632) bypasses the movable pulley (610) and the second fixed pulley (622) to be fixed on the sliding element (30).

9. The base assembly (1) according to claim 6, **characterized in that**, the pulley mechanism comprises:
a movable pulley (610) disposed on the sliding element (30);
a first fixed pulley (621) disposed on the sliding element (30);
a second fixed pulley (622) disposed on the base (10); and
a linkage (630) connecting the first fixed pulley (621), the movable pulley (610) and the second fixed pulley (622);
wherein the first end of the traction element (40) is connected with the movable pulley (610),
preferably, the base (10) is provided with a positioning column (150), the sliding element (30) is provided with an avoidance groove to avoid the positioning column (150), a first end of the linkage (630) is fixed on the positioning column (150), and a second end of the linkage (630) bypasses the first fixed pulley (621), the movable pulley (610) and the second fixed pulley (622) and is fixed on the sliding element (30).

10. The base assembly (1) according to claim 7 or claim 9 or claims dependent thereon, **characterized in that**, the sliding element (30) is provided with a sliding groove (341) for the movable pulley (610) to slide.

11. The base assembly (1) according to claim 5 or any claim dependent thereon, **characterized in that**, the base assembly (1) further comprises a supporting leg indicator (70) linked with the second end of the stroke enlarging mechanism (60), and the sliding element (30) is provided with an indication window (330) for at least partially exposing the supporting leg indicator (70).

12. The base assembly (1) according to any of the previous claims, **characterized in that**, a buffer elastic element (410) is disposed at a connection of a second end of the traction element (40) and the supporting leg (20),
and/or the base assembly (1) further comprises a base bracket (160) disposed in the base (10), the sliding element (30) comprises a sliding bracket (340) slidably connected to the base bracket (160), a sliding groove (341) is provided on one of the base bracket (160) and the sliding bracket (340), and a sliding rod (161) matched with the sliding groove (341) is provided on the other of the base bracket (160) and the sliding bracket (340).

13. A child safety seat for a vehicle comprising:
a base assembly (1) according to any one of claims 1 to 12; and
a seat (2) disposed on the base assembly (1).

14. The child safety seat according to claim 13, **characterized in that**, the seat (2) is rotatably disposed on the base (10) and has at least a forward position and a backward position, the child safety seat has a first use mode and a second use mode, in the first use mode, the sliding element (30) extends outside and the supporting leg (20) is unfolded to form a ground-contact support, and in the second use mode, the sliding element (30) retracts and the supporting leg (20) is folded at a bottom of the base (10).

15. The child safety seat according to any of claim 13 or claim 14, **characterized in that**, an accommodating groove (170) for accommodating the supporting leg (20) is provided on the bottom of the base (10), and after the supporting leg (20) is folded at the bottom of the base (10), a lower surface of the supporting leg (20) does not protrude from a bottom surface of the base (10).

## Patentansprüche

1. Basisanordnung (1) umfassend:
eine Basis (10);
ein Stützbein (20);
ein Gleitelement (30), das teleskopisch an der Basis (10) angeordnet ist, wobei das Stützbein (20) schwenkbar mit dem Gleitelement (30) verbunden ist und zusammen mit dem Gleitelement (30) aus- und einklappt; **dadurch gekennzeichnet, dass**
ein Zugelement (40), das eingerichtet ist, das Stützbein (20) und das Gleitelement (30) in Richtung der Basis (10) zu ziehen, wenn sich das Stützbein (20) von einer ausgeklappten Position in eine eingeklappte Position dreht.

2. Basisanordnung (1) nach Anspruch 1, **dadurch gekennzeichnet, dass** das Zugelement (40) ein flexibles Element ist,
wobei das flexible Element ein Stahldraht, ein Seil oder ein Gurtband ist.

3. Basisanordnung (1) nach einem der vorangehenden Ansprüche, **dadurch gekennzeichnet, dass** die Basisanordnung (1) ferner ein Antriebselement (50) umfasst, das mit dem Stützbein (20) verschwenkt wird, und das Antriebselement (50) eingerichtet ist, das Zugelement (40) aufzurollen, so dass das Stützbein (20) gezogen wird, um es zur Basis (10) hin zu bewegen,
vorzugsweise ist das Antriebselement (50) auf dem Stützbein (20) angeordnet, und das Antriebselement (50) ist einstückig mit dem Stützbein (20) ausgebildet und als ein Teil des Stützbeins (20) geformt; alternativ sind das Antriebselement (50) und das Stützbein (20) separat ausgebildet und durch eine Befestigungsstruktur fest miteinander verbunden.

4. Basisanordnung (1) nach Anspruch 3, **dadurch gekennzeichnet, dass** sich das Antriebselement (50) an einem oberen Ende des Stützbeins (20) befindet,
und/oder das Antriebselement (50) als Vorwölbung geformt ist, und das Antriebselement (50) mit einem bogenförmigen Teil versehen ist, der an das Zugelement (40) angepasst ist; alternativ ist das Antriebselement (50) als Seilzug geformt; alternativ ist das Antriebselement (50) als Säule geformt,
und/oder ein erstes Ende des Zugelements (40) mit der Basis (10) verbunden ist und ein zweites Ende des Zugelements (40) mit einem der Antriebselemente (50) und einem oberen Ende des Stützbeins (20) verbunden ist,
und/oder eine obere Innenwand der Basis (10) mit einer Befestigungssäule versehen ist und das erste Ende des Zugelements (40) an der Befestigungssäule durch ein erstes Befestigungselement befestigt ist.

5. Basisanordnung (1) nach einem der vorangehenden Ansprüche, **dadurch gekennzeichnet, dass** die Basisanordnung (1) ferner einen Hubvergrößerungsmechanismus (60) mit einem ersten Ende umfasst, das mit der Basis (10) verbunden ist, und einem zweiten Ende, das über das Zugelement (40) mit dem Stützbein (20) verbunden ist,
vorzugsweise ist der Hubvergrößerungsmechanismus (60) ein rhombischer Teleskoprahmen,
vorzugsweise ist ein Befestigungsrahmen (120) in der Basis (10) angeordnet, und das erste Ende des Hubvergrößerungsmechanismus (60) ist durch ein zweites Befestigungselement mit dem Befestigungsrahmen (120) verbunden.

6. Basisanordnung (1) nach Anspruch 5, **dadurch gekennzeichnet, dass** das Hubvergrößerungsmechanismus (60) ein Seilzugmechanismus ist.

7. Basisanordnung (1) nach Anspruch 6, **dadurch gekennzeichnet, dass** der Seilzugmechanismus umfasst:
einen bewegbaren Seilzug (610), der an dem Gleitelement (30) angeordnet ist;
einen befestigteen Seilzug (620), der an der Basis (10) angeordnet ist; und
eine Verbindung (630), die den bewegbaren Seilzug (610) und den befestigten Seilzug (620) verbindet;
wobei das erste Ende des Zugelements (40) mit dem bewegbaren Seilzug (610) verbunden ist,
vorzugsweise ist ein erstes Ende der Verbindung (630) an dem Gleitelement (30) befestigt, und ein zweites Ende der Verbindung (630) umgeht den beweglichen Seilzug (610) und den befestigten Seilzug (620), um an dem Gleitelement (30) befestigt zu werden.

8. Basisanordnung (1) nach Anspruch 7, **dadurch gekennzeichnet, dass** der befestigte Seilzug (620) einen ersten befestigten Seilzug (621) und einen zweiten befestigten Seilzug (622) umfasst, die symmetrisch angeordnet sind, die Verbindung (630) eine erste Verbindung (631) und eine zweite Verbindung (632) umfasst, die symmetrisch angeordnet sind, ein erstes Ende der ersten Verbindung (631) an dem Gleitelement (30) befestigt ist und ein zweites Ende der ersten Verbindung (631) an dem bewegbaren Seilzug (610) und dem ersten befestigten Seilzug (621) vorbei läuft, und an dem Gleitelement (30) befestigt ist; und ein erstes Ende der zweiten Verbindung (632) an dem Gleitelement (30) befestigt ist und ein zweites Ende der zweiten Verbindung (632) an dem bewegbaren Seilzug (610) und dem zweiten befestigten Seilzug (622) vorbei läuft, und an dem Gleitelement (30) befestigt ist.

9. Basisanordnung (1) nach Anspruch 6, **dadurch gekennzeichnet, dass** der Seilzugmechanismus umfasst:
einen bewegbaren Seilzug (610), der an dem Gleitelement (30) angeordnet ist;
einen ersten befestigten Seilzug (621), der an dem Gleitelement (30) angeordnet ist;
einen zweiten befestigten Seilzug (622), der an der Basis (10) angeordnet ist; und
eine Verbindung (630), die den ersten befestigten Seilzug (621), den bewegbaren Seilzug (610) und den zweiten befestigten Seilzug (622) verbindet;
wobei das erste Ende des Zugelements (40) mit dem bewegbaren Seilzug (610) verbunden ist,
vorzugsweise ist die Basis (10) mit einer Positionierungssäule (150) versehen, das Gleitelement (30) ist mit einer Ausweichnut versehen, um die Positionierungssäule (150) zu umgehen, ein erstes Ende der Verbindung (630) ist an der Positionierungssäule (150) befestigt, und ein zweites Ende der Verbindung (630) umgeht den ersten befestigten Seilzug (621), den bewegbaren Seilzug (610) und den zweiten befestigten Seilzug (622) und ist an dem Gleitelement (30) befestigt.

10. Basisanordnung (1) nach Anspruch 7 oder Anspruch 9 oder davon abhängigen Ansprüchen, **dadurch gekennzeichnet, dass** das Gleitelement (30) mit einer Gleitnut (341) versehen ist, damit der bewegbare Seilzug (610) darin gleiten kann.

11. Basisanordnung (1) nach Anspruch 5 oder einem davon abhängigen Anspruch, **dadurch gekennzeichnet, dass** die Basisanordnung (1) ferner einen Stützbeinanzeiger (70) aufweist, der mit dem zweiten Ende des Hubvergrößerungsmechanismus (60) gekoppelt ist, und das Gleitelement (30) mit einem Anzeigefenster (330) versehen ist, das den Stützbeinanzeiger (70) zumindest zum Teil frei lässt.

12. Basisanordnung (1) nach einem der vorangehenden Ansprüche, **dadurch gekennzeichnet, dass** ein elastisches Pufferelement (410) an einer Verbindung eines zweiten Endes des Zugelements (40) und des Stützbeins (20) angeordnet ist,
und/oder die Basisanordnung (1) ferner einen in der Basis (10) angeordneten Basisbügel (160) umfasst, das Gleitelement (30) einen Gleitbügel (340) umfasst, der gleitend mit dem Basisbügel (160) verbunden ist, eine Gleitnut (341) an dem Gleitbügel (160) und dem Gleitbügel (340) vorgesehen ist und eine an die Gleitnut (341) angepasste Gleitstange (161) an dem anderen Basisbügel (160) und dem Gleitbügel (340) vorgesehen ist.

13. Kindersicherheitssitz für ein Fahrzeug, umfassend:
eine Basisanordnung (1) nach einem der Ansprüche 1 bis 12; und
einen Sitz (2), der an der Basisanordnung (1) angeordnet ist.

14. Kindersicherheitssitz nach Anspruch 13, **dadurch gekennzeichnet, dass** der Sitz (2) drehbar an der Basis (10) angeordnet ist und zumindest eine Vorwärtsposition und eine Rückwärtsposition aufweist, dass der Kindersicherheitssitz einen ersten Verwendungsmodus und einen zweiten Verwendungsmodus aufweist, das Gleitelement (30) im ersten Verwendungsmodus nach außen ausklappt und das Stützbein (20) ausgeklappt wird, um eine Bodenkontaktstütze zu bilden, und das Gleitelement (30) im zweiten Verwendungsmodus einfährt und das Stützbein (20) an einem Boden der Basis (10) eingeklappt wird.

15. Kindersicherheitssitz nach einem von Anspruch 13 oder Anspruch 14, **dadurch gekennzeichnet, dass** eine Aufnahmenut (170) zum Aufnehmen des Stützbeins (20) am Boden der Basis (10) bereitgestellt ist und eine untere Oberfläche des Stützbeins (20) nicht von einer Bodenfläche der Basis (10) vorsteht, nachdem das Stützbein (20) am Boden der Basis (10) eingeklappt wird.

## Revendications

1. Ensemble de base (1) comprenant :
une base (10) ;
un jambage de support (20) ; et
un élément de coulissement (30) disposé de façon télescopique sur la base (10), le jambage de support (20) étant connecté de façon pivotante à l'élément de coulissement (30) et étant étendu et rétracté en association avec l'élément de coulissement (30) ; **caractérisé en ce que** :
un élément de traction (40) est configuré pour tirer le jambage de support (20) et l'élément de coulissement (30) pour les déplacer en direction de la base (10) lorsque le jambage de support (20) passe par rotation d'une position déployée à une position rabattue.

2. Ensemble de base (1) selon la revendication 1, **caractérisé en ce que** : l'élément de traction (40) est un élément souple,
de préférence, l'élément souple est un fil en acier, un cordon ou une sangle.

3. Ensemble de base (1) selon l'une quelconque des revendications précédentes, **caractérisé en ce que** : l'ensemble de base (1) comprend en outre un élément d'entraînement (50) pivoté avec le jambage de support (20), et l'élément d'entraînement (50) est configuré pour enrouler l'élément de traction (40) de telle sorte que le jambage de support (20) soit tiré pour être déplacé en direction de la base (10),
de préférence, l'élément d'entraînement (50) est disposé sur le jambage de support (20) et l'élément d'entraînement (50) est formé d'un seul tenant avec le jambage de support (20) et est formé en tant que partie du jambage de support (20) ; à titre d'alternative, l'élément d'entraînement (50) et le jambage de support (20) sont formés séparément et sont connectés de façon fixe l'un à l'autre par une structure de fixation.

4. Ensemble de base (1) selon la revendication 3, **caractérisé en ce que** : l'élément d'entraînement (50) est localisé au niveau d'une extrémité supérieure du jambage de support (20) ; et/ou
l'élément d'entraînement (50) est conçu de manière à présenter la conformation d'un bossage et l'élément d'entraînement (50) est muni d'une partie en forme d'arc en correspondance adaptative vis-à-vis de l'élément de traction (40) ; à titre d'alternative, l'élément d'entraînement (50) est conçu de manière à présenter la conformation d'une poulie ; à titre d'alternative, l'élément d'entraînement (50) est conçu de manière à présenter la conformation d'une colonne ; et/ou
une première extrémité de l'élément de traction (40) est connectée à la base (10) et une seconde extrémité de l'élément de traction (40) est connectée soit à l'élément d'entraînement (50), soit à une extrémité supérieure du jambage de support (20) ; et/ou
une paroi de sommet interne de la base (10) est munie d'une colonne de fixation et la première extrémité de l'élément de traction (40) est fixée sur la colonne de fixation au moyen d'un premier élément d'assemblage.

5. Ensemble de base (1) selon l'une quelconque des revendications précédentes, **caractérisé en ce que** l'ensemble de base (1) comprend en outre un mécanisme d'augmentation de course (60) qui comporte une première extrémité connectée à la base (10) et une seconde extrémité connectée au jambage de support (20) par l'intermédiaire de l'élément de traction (40),
de préférence, le mécanisme d'augmentation de course (60) est une structure télescopique rhombique, et
de préférence, une structure de fixation (120) est disposée dans la base (10) et la première extrémité du mécanisme d'augmentation de course (60) est connectée à la structure de fixation (120) par l'intermédiaire d'un second élément d'assemblage.

6. Ensemble de base (1) selon la revendication 5, **caractérisé en ce que** le mécanisme d'augmentation de course (60) est un mécanisme à poulies.

7. Ensemble de base (1) selon la revendication 6, **caractérisé en ce que** le mécanisme à poulies comprend :
une poulie amovible et mobile (610) disposée sur l'élément de coulissement (30) ;
une poulie fixe (620) disposée sur la base (10) ; et
un élément de liaison (630) qui connecte la poulie amovible et mobile (610) et la poulie fixe (620) ;
dans lequel la première extrémité de l'élément de traction (40) est connectée avec la poulie amovible et mobile (610),
de préférence, une première extrémité de l'élément de liaison (630) est fixée sur l'élément de coulissement (30) et une seconde extrémité de l'élément de liaison (630) contourne la poulie amovible et mobile (610) et la poulie fixe (620) pour être fixée sur l'élément de coulissement (30).

8. Ensemble de base (1) selon la revendication 7, **caractérisé en ce que** la poulie fixe (620) comprend une première poulie fixe (621) et une seconde poulie fixe (622) qui sont disposées de façon symétrique, l'élément de liaison (630) comprend un premier élément de liaison (631) et un second élément de liaison (632) qui sont disposés de façon symétrique, une première extrémité du premier élément de liaison (631) est fixée sur l'élément de coulissement (30) et une seconde extrémité du premier élément de liaison (631) contourne la poulie amovible et mobile (610) et la première poulie fixe (621) pour être fixée sur l'élément de coulissement (30) ; et une première extrémité du second élément de liaison (632) est fixée sur l'élément de coulissement (30) et une seconde extrémité du second élément de liaison (632) contourne la poulie amovible et mobile (610) et la seconde poulie fixe (622) pour être fixée sur l'élément de coulissement (30).

9. Ensemble de base (1) selon la revendication 6, **caractérisé en ce que** le mécanisme à poulies comprend :
une poulie amovible et mobile (610) disposée sur l'élément de coulissement (30) ;
une première poulie fixe (621) disposée sur l'élément de coulissement (30) ;
une seconde poulie fixe (622) disposée sur la base (10) ; et
un élément de liaison (630) qui connecte la première poulie fixe (621), la poulie amovible et mobile (610) et la seconde poulie fixe (622) ;
dans lequel la première extrémité de l'élément de traction (40) est connectée avec la poulie amovible et mobile (610),
de préférence, la base (10) est munie d'une colonne de positionnement (150), l'élément de coulissement (30) est muni d'une rainure d'évitement pour éviter la colonne de positionnement (150), une première extrémité de l'élément de liaison (630) est fixée sur la colonne de positionnement (150) et une seconde extrémité de l'élément de liaison (630) contourne la première poulie fixe (621), la poulie amovible et mobile (610) et la seconde poulie fixe (622) et est fixée sur l'élément de coulissement (30).

10. Ensemble de base (1) selon la revendication 7 ou la revendication 9 ou selon l'une quelconque des revendications qui en dépendent, **caractérisé en ce que** l'élément de coulissement (30) est muni d'une rainure de coulissement (341) pour le coulissement de la poulie amovible et mobile (610).

11. Ensemble de base (1) selon la revendication 5 ou selon l'une quelconque des revendications qui en dépendent, **caractérisé en ce que** l'ensemble de base (1) comprend en outre un indicateur de jambage de support (70) lié à la seconde extrémité du mécanisme d'augmentation de course (60) et l'élément de coulissement (30) est muni d'une fenêtre d'indication (330) pour exposer au moins partiellement l'indicateur de jambage de support (70).

12. Ensemble de base (1) selon l'une quelconque des revendications précédentes, **caractérisé en ce que** : un élément élastique à fonction de tampon (410) est disposé au niveau d'une connexion d'une seconde extrémité de l'élément de traction (40) et du jambage de support (20) ; et/ou
l'ensemble de base (1) comprend en outre une console de base (160) disposée dans la base (10), l'élément de coulissement (30) comprend une console de coulissement (340) connectée de façon coulissante à la console de base (160), une rainure de coulissement (341) est prévue sur une console parmi la console de base (160) et la console de coulissement (340) et une tige de coulissement (161) en correspondance adaptative avec la rainure de coulissement (341) est prévue sur l'autre console parmi la console de base (160) et la console de coulissement (340).

13. Siège de sécurité pour enfant pour un véhicule comprenant :
un ensemble de base (1) selon l'une quelconque des revendications 1 à 12 ; et
un siège (2) disposé sur l'ensemble de base (1).

14. Siège de sécurité pour enfant selon la revendication 13, **caractérisé en ce que** le siège (2) est disposé à rotation sur la base (10) et présente au moins une position orientée vers l'avant et une position orientée vers l'arrière, le siège de sécurité pour enfant présente un premier mode d'utilisation et un second mode d'utilisation, dans le premier mode d'utilisation, l'élément de coulissement (30) est étendu à l'extérieur et le jambage de support (20) est déployé de manière à former un support de contact avec le sol et dans le second mode d'utilisation, l'élément de coulissement (30) est rétracté et le jambage de support (20) est rabattu au niveau d'un fond de la base (10).

15. Siège de sécurité pour enfant selon l'une quelconque des revendications 13 ou 14, **caractérisé en ce qu'**un renfoncement de logement (170) pour loger le jambage de support (20) est prévu sur le fond de la base (10) et après que le jambage de support (20) est rabattu au niveau du fond de la base (10), une surface inférieure du jambage de support (20) ne fait pas saillie depuis une surface de fond de la base (10).
